# EUROPÄISCHE PATENTSCHRIFT

(11) **EP 3 710 295 B1**
(45) Veröffentlichungstag und Bekanntmachung des Hinweises auf die Patenterteilung: **06.10.2021**
(21) Anmeldenummer: 18789624.6
(22) Anmeldetag: 18.10.2018
(51) Int. Cl.: B60K 1/00, B60K 6/20, F16H 3/44

(54) **ANTRIEBSVORRICHTUNG FÜR EINE FAHRZEUGACHSE EINES ZWEISPURIGEN FAHRZEUGS**
DRIVE DEVICE FOR A VEHICLE AXLE OF A TWO-TRACK VEHICLE
DISPOSITIF D'ENTRAÎNEMENT POUR ESSIEU DE VÉHICULE À DEUX VOIES

(30) Priorität: 13.11.2017 DE 102017220166
(43) Veröffentlichungstag der Anmeldung: 23.09.2020
(73) Patentinhaber: Audi AG, 85045 Ingolstadt (DE)
(72) Erfinder: PINSCHMIDT, Udo, 85080 Gaimersheim (DE); HUMMEL, Steffen, 71287 Flacht (DE); WIRTH, Christian, 85452 Moosinning / Eichenried (DE)
(86) Internationale Anmeldenummer: PCT/EP2018/078613
(87) Internationale Veröffentlichungsnummer: WO 2019/091745

(56) Entgegenhaltungen:
- EP-A1- 2 775 171
- DE-A1-102010 036 239
- DE-A1-102013 202 381
- DE-A1-102014 210 549

## Beschreibung

Die Erfindung betrifft eine Antriebsvorrichtung beinhaltend eine Fahrzeugachse, insbesondere Hinterachse, für ein zweispuriges Fahrzeug nach dem Oberbegriff des Patentanspruches 1.

Aus der DE 10 2014 015 793 A1 ist eine Antriebsvorrichtung für eine Fahrzeug-Hinterachse bekannt, die ein Achsdifferenzial aufweist, das eingangsseitig mit einer Primär-Antriebsmaschine (zum Beispiel Brennkraftmaschine) verbindbar ist und ausgangsseitig mit beidseitig angeordneten Flanschwellen mit Fahrzeugrädern der Fahrzeugachse verbindbar ist. Der Fahrzeugachse ist eine zusätzliche Antriebsmaschine (insbesondere Elektromaschine) sowie ein schaltbares Überlagerungsgetriebe zugeordnet. Das Überlagerungsgetriebe kann in eine Momentenverteilungs-Gangstufe schaltbar sein, in der ein von der zusätzlichen Antriebsmaschine erzeugtes Antriebsmoment erzeugt wird, in Abhängigkeit von dessen Größe und Drehrichtung eine Momentenverteilung auf die beiden Fahrzeugräder änderbar ist. Alternativ dazu ist das Überlagerungsgetriebe in einen Hybrid-Modus schaltbar, in dem das von der zusätzlichen Antriebsmaschine generierte Antriebsmoment in einer schaltbaren Hybrid-Gangstufe über das Achsdifferenzial gleichmäßig verteilt auf beide Flanschwellen der Fahrzeugräder einkoppelbar ist. Bei bestimmten Fahrsituationen, zum Beispiel bei einer Kurvenfahrt, kann durch eingelegter Momentenverteilungs-Gangstufe das Fahrverhalten durch eine Drehmoment-Umverteilung (Torque-Vectoring oder Quersperrenfunktion) unterstützt werden. So kann bei einer Kurvenfahrt am Kurveneingang ein Antriebsmoment zum kurvenäußeren Fahrzeugrad verlagert werden (Torque-Vectoring). Alternativ/zusätzlich kann bei der Kurvenfahrt am Kurvenausgang das Antriebsmoment zum kurveninneren Fahrzeugrad verlagert werden (Quersperrenfunktion). Demgegenüber kann bei aktiviertem Hybrid-Modus zum Beispiel eine Boost-Funktion erfolgen.

In der obigen DE 10 2014 015 793 A1 weist das Überlagerungsgetriebe insgesamt drei Planetengetriebe auf, die über zwei Bremsen schaltbar sind, um den Hybrid-Modus oder den Momentenverteilungs-Modus bereitzustellen, wodurch sich insgesamt eine bauraumintensive Anordnung ergibt.

Aus der DE 10 2013 202381 A1 ist eine gattungsgemäße Antriebsvorrichtung bekannt.

Die Aufgabe der Erfindung besteht darin, eine Antriebsvorrichtung für eine Fahrzeugachse eines zweispurigen Fahrzeugs bereitzustellen, die im Vergleich zum Stand der Technik bauraumreduzierter aufgebaut ist, und bei der mit einfachen Mitteln eine Funktionserweiterung/-reduzierung ermöglicht ist, und zwar bei geringerem Bauraumbedarf sowie bei gesteigerter Fahrdynamik.

Die Aufgabe ist durch die Merkmale des Anspruchs 1 gelöst. Bevorzugte Weiterbildungen der Erfindung sind in den Unteransprüchen offenbart.

Gemäß dem kennzeichnenden Teil des Anspruches 1 weist das Überlagerungsgetriebe genau zwei Planetengetriebe auf, und zwar ein Eingangs-Planetengetriebe, das als ein Ravigneaux-Radsatz ausgebildet ist, und ein Ausgangs-Planetengetriebe, das als ein einfacher Planetengetriebe-Radsatz ausgebildet ist. Das Eingangs-Planetengetriebe ist eingangsseitig mit der zusätzlichen Antriebsmaschine trieblich verbunden. Das Ausgangs-Planetengetriebe weist ein Eingangselement auf, das mit dem Eingangs-Planetengetriebe verbunden ist, während dessen Ausgangselement mit der Achsdifferenzial-Eingangsseite trieblich verbunden ist. Auf diese Weise können Hybrid- und/oder Momentenverteilungs-Gangstufen in einfacher Weise realisiert werden. Bei einer geschalteten ersten Hybrid-Gangstufe, die bevorzugt als ein Anfahrgang realisiert ist, und bei einer geschalteten zweiten Hybrid-Gangstufe, die bevorzugt als ein CO₂-optimierter Fahrgang für höhere Fahrgeschwindigkeiten ausgelegt ist, ergibt sich somit ein Lastpfad, in dem das Eingangs-Planetengetriebe und das Ausgangs-Planetengetriebe ohne Leistungsverzweigung eingebunden sind. Demgegenüber ergibt sich bei der geschalteter Momentenverteilungs-Gangstufe ein Lastpfad, in dem ebenfalls sowohl das Eingangs- und das Ausgangs-Planetengetriebe eingebunden sind, wobei am Eingangs-Planetengetriebe eine Leistungsverzweigung erfolgt.

In einer technischen Umsetzung können die beiden Planetengetriebe sowie das Achsdifferenzial in Reihe hintereinander koaxial zur Flanschwelle angeordnet sein. Das Eingangs-Planetengetriebe kann mit seinem Eingangselement, insbesondere einem ersten Sonnenrad, mit einer von der zusätzlichen Antriebsmaschine angetriebenen Getriebeeingangswelle drehfest verbunden sein. Demgegenüber kann das Ausgangselement des Ausgangs-Planetengetriebes über einen Hybrid-Abtriebsflansch drehfest auf einer Getriebeausgangswelle angeordnet sein, die trieblich mit der Achsdifferenzial-Eingangsseite verbunden ist. Bevorzugt kann das Ausgangselement des Ausgangs-Planetengetriebes ein, Planetenräder tragender Planetenradträger sein. Als Reaktionselement kann das Ausgangs-Planetengetriebe ein, mit den Planetenrädern kämmendes, gehäusefestes Sonnenrad sein. Dessen Eingangselement kann dagegen ein mit den Planetenrädern kämmendes Hohlrad sein, das trieblich mit dem Eingangs-Planetengetriebe gekoppelt ist.

In einer bauraumgünstigen Ausführungsvariante kann das Hohlrad des Ausgangs-Planetengetriebes und ein Hohlrad des Eingangs-Planetengetriebes gemeinsam auf einer Hohlradwelle drehfest angeordnet sein. Das Hohlrad des als Ravigneaux-Radsatz ausgebildeten Eingangs-Planetengetriebes kann mit Planetenrädern eines radial äußeren Planetenradsatzes kämmen. Diese sind wiederum sowohl mit Planetenrädern eines radial inneren Planetenradsatzes als auch mit dem bereits erwähnten ersten Sonnenrad in Zahneingriff, das über die Getriebeeingangswelle mit der zusätzlichen Antriebsmaschine verbunden ist. Die Planetenräder des radial inneren Planetenradsatzes kämmen dagegen mit einem zweiten Sonnenrad, wobei die beiden Planetenradsätze an einem gemeinsamen Planetenradträger drehgelagert sind.

Der gemeinsame Planetenradträger des Eingangs-Planetengetriebes kann über ein erstes Hybrid-Schaltelement SH1 am Getriebegehäuse festbremsbar oder davon lösbar sein. In der ersten Hybrid-Gangstufe H1 ist der gemeinsame Planetenradträger des Eingangs-Planetengetriebes mittels des ersten Hybrid-Schaltelementes SH1 gehäusefest geschaltet. Dadurch ergibt sich ein Lastpfad von der zusätzlichen Antriebsmaschine über das erste Sonnenrad sowie über die Planetenräder des radial äußeren Planetenradsatzes zum Hohlrad des Eingangs-Planetengetriebes und von dort weiter über die Hohlradwelle aus das Ausgangs-Planetengetriebe zur Getriebeausgangswelle, und zwar ohne Leistungsverzweigung mit entsprechend hohem Wirkungsgrad, das heißt ohne größere Verlustleistungen (Blindleistungen).

Die zusätzliche Antriebsmaschine kann zur Drehmomentwandlung über eine Vorgelegestufe mit der Getriebeeingangswelle gekoppelt sein, insbesondere mit einer einstufigen Stirnradstufe. In diesem Fall kann die zusätzliche Antriebsmaschine achsparallel zur Flanschwelle positioniert sein.

Das zweite Sonnenrad kann über ein zweites Schaltelement SH2 am Getriebegehäuse festbremsbar sein oder davon lösbar sein. In der zweiten Hybrid-Gangstufe H2 ist daher das zweite Sonnenrad des Eingangs-Planetengetriebes mittels des zweiten Hybrid-Schaltelementes SH2 gehäusefest geschaltet. Dadurch ergibt sich ein Lastpfad von der zusätzlichen Antriebsmaschine über das erste Sonnenrad sowie über die Planetenräder des radial äußeren Planetenradsatzes zum Hohlrad und von dort weiter über die Hohlradwelle und das Ausgangs-Planetengetriebe zur Getriebeausgangswelle. Dieser Lastpfad erfolgt ebenfalls ohne Leistungsverzweigung.

In einer Weiterbildung kann die Getriebestruktur zum Achsdifferenzial führende Momentenverteilungs-Abtriebswelle aufweisen. Diese kann einen Momentenverteilungs-Flansch drehfest tragen, der über ein Momentenverteilungs-Schaltelement STV trieblich mit dem gemeinsamen Planetenradträger des Eingangs-Planetengetriebes koppelbar oder davon lösbar ist.

Das Achsdifferenzial kann in beliebiger Bauweise realisiert sein. In einer konkreten Ausführungsform kann das Achsdifferenzial ebenfalls als ein Ravigneaux-Radsatz ausgebildet sein, bei dem Planetenräder eines radial äußeren Planetenradsatzes sowohl mit dem radial äußeren Hohlrad, das die Achsdifferenzial-Eingangsseite bildet, als auch mit Planetenrädern eines radial inneren Planetenradsatzes und auch mit einem ersten Sonnenrad kämmen. Demgegenüber kämmen die Planetenräder des radial inneren Planetenradsatzes mit einem zweiten Sonnenrad. Die beiden Planetenradsätze sind an einem gemeinsamen Planetenradträger drehgelagert. Bevorzugt ist es, wenn das erste Sonnenrad auf der Momentenverteilungs-Abtriebswelle drehfest angeordnet ist. Das zweite Sonnenrad kann dagegen drehfest auf der einen Flanschwelle angeordnet sein, während der gemeinsame Planetenradträger drehfest auf der anderen Flanschwelle angeordnet sein kann.

Bei eingelegter Momentenverteilungs-Gangstufe TV sind in der oben dargelegten Getriebestruktur die Momentenverteilungs-Abtriebswelle und der gemeinsame Planetenradträger des Eingangs-Planetengetriebes trieblich miteinander verbunden. Dadurch ergibt sich ein Lastpfad von der zusätzlichen Antriebsmaschine in das Eingangs-Planetengetriebe. An dessen gemeinsamen Planetenradträger erfolgt eine Leitungsverteilung, bei der ein erster Teilpfad über das Hohlrad des Eingangs-Planetengetriebes und über die Hohlradwelle zum Ausgangs-Planetengetriebe führt. Von dort führt der erste Teilpfad weiter über den Planetenradträger des Ausgangs-Planetengetriebes zur Getriebeausgangswelle. Ein zweiter Teilpfad führt über den Planetenradträger des Eingangs-Planetengetriebes sowie das geschlossene Momentenverteilungs-Schaltelement zur Momentenverteilungs-Abtriebswelle und von dort zum ersten Sonnenrad des Achsdifferenzials.

Im Hinblick auf eine Packageoptimierung ist die folgende Anordnung der Getriebekomponenten bevorzugt: So kann in der Fahrzeugquerrichtung betrachtet von fahrzeuginnen nach fahrzeugaußen in einer Reihenfolge hintereinander das Achsdifferenzial, das Ausgangs-Planetengetriebe, das Eingangs-Planetengetriebe und die zusätzliche Antriebsmaschine angeordnet sein. Die beiden Hybrid-Schaltelemente SH1, SH2 können zwischen dem fahrzeugäußeren Eingangs-Planetengetriebe und der zusätzlichen Antriebsmaschine positioniert sein. Im Unterschied dazu kann das Momentenverteilungs-Schaltelement STV zwischen dem Eingangs- und dem Ausgangs-Planetengetriebe positionierbar sein und als Kupplung realisiert sein. Demgegenüber sind die Hybrid-Schaltelemente SH1, SH2 bauteileinfach als Bremsen realisiert.

Nachfolgend ist ein Ausführungsbeispiel der Erfindung anhand der beigefügten Figuren beschrieben.

Es zeigen:
- Figur 1: in einer schematischen Darstellung eine Antriebsvorrichtung für eine Fahrzeug-Hinterachse eines zweispurigen Fahrzeugs;
- Figuren 2 bis 4: jeweils Ansichten entsprechend der Figur 1 mit hervorgehobenem Antriebsmomentenfluss bei geschalteter erster Hybrid-Gangstufe (Figur 2), bei geschalteter zweiter Hybrid-Gangstufe (Figur 3) und bei geschalteter Momentenverteilungs-Gangstufe (Figur 4).

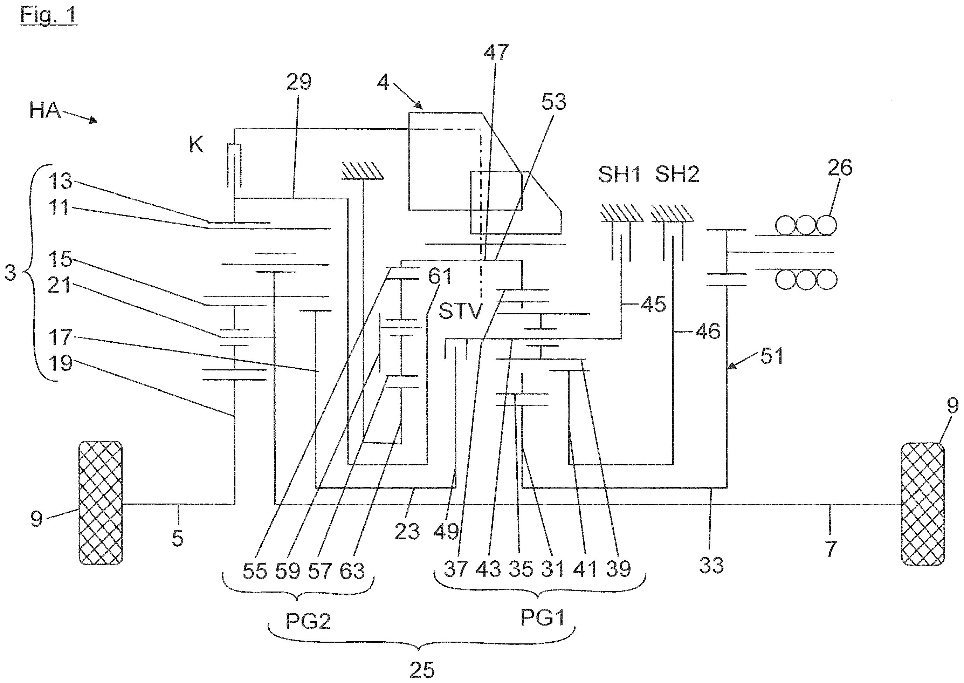

In der Figur 1 ist grob schematisch eine Getriebestruktur einer Antriebsvorrichtung für eine Fahrzeug-Hinterachse HA eines zweispurigen Fahrzeugs gezeigt. Die in der Figur 1 angedeutete Antriebsvorrichtung kann Bestandteil eines Allradantriebes sein, bei dem eine nicht dargestellte frontseitige Brennkraftmaschine als Primär-Antriebsmaschine über ein Getriebe sowie ein Mittendifferenzial und ein Vorderachsdifferenzial auf die Vorderräder des Fahrzeugs abtreibt. Das Mittendifferenzial kann über eine Kardanwelle sowie über einen Kegeltrieb 4 trieblich mit der Eingangsseite 13 eines Hinterachsdifferenzials 3 verbunden sein. Zwischen dem Kegeltrieb 4 und der Eingangsseite 13 des Hinterachsdifferenzials 3 ist eine Kupplung K geschaltet, mittels der die Hinterachse HA trieblich von der Kardanwelle abkoppelbar ist.

Das Hinterachsdifferenzial 3 ist ausgangsseitig über beidseitig angeordnete Flanschwellen 5, 7 mit den Fahrzeughinterrädern 9 der Fahrzeug-Hinterachse HA trieblich gekoppelt. In der Figur 1 ist das Hinterachsdifferenzial 3 ein Planetendifferenzial mit einem Ravigneaux-Radsatz, bei dem Planetenräder 11 eines radial äußeren Planetenradsatzes sowohl mit einem radial äußeren Hohlrad 13, das die Eingangsseite des Achsdifferenzials 3 bildet, als auch mit Planetenrädern 15 eines radial inneren Planetenradsatzes kämmen. Zudem sind die Planetenräder 11 des radial äußeren Planetenradsatzes in Zahneingriff mit einem ersten, großen Sonnenrad 17. Die Planetenräder 15 des zweiten Planetenradsatzes sind dagegen in Zahneingriff mit einem zweiten, kleinen Sonnenrad 19. Beide Planetenradsätze sind an einem gemeinsamen Planetenradträger 21 drehgelagert, der drehfest auf einer getriebeseitigen Flanschwelle 7 sitzt. Demgegenüber sitzt das zweite, kleine Sonnenrad 19 drehfest auf der getriebefernen Flanschwelle 5, während das erste, große Sonnenrad 17 drehfest auf einer Momentenverteilungs-Abtriebswelle 23 sitzt, die in das Überlagerungsgetriebe 25 führt.

Die Hinterachse HA weist das bereits erwähntes Überlagerungsgetriebe 25 sowie eine Elektromaschine 26 auf. Das Überlagerungsgetriebe 25 ist in einem Hybrid-Modus oder in einem Momentenverteilungs-Modus (das heißt elektronisches Torque-Vectoring oder Quersperrenfunktion) betreibbar, wie es später beschrieben wird. Im Hybrid-Modus wird ein von der Elektromaschine 26 generiertes Antriebsmoment über das Überlagerungsgetriebe 25 sowie über das Hinterachsdifferenzial 3 gleichmäßig verteilt auf die beiden Flanschwellen 5, 7 eingekoppelt. Der Hybrid-Modus ist rein elektromotorisch durchführbar oder in Kombination der Elektromaschine 26 mit der Brennkraftmaschine (zum Beispiel für eine Boost-Funktion).

Im Momentenverteilungs-Modus wird das von der Elektromaschine 26 generierte Antriebsmomente nicht nur zur Eingangsseite (Hohlrad 13) des Achsdifferenzials 3 geleitet, sondern auch über das Überlagerungsgetriebe 25 zum ersten großen Sonnenrad 17 des Achsdifferenzials 3, um eine Momentenverteilung auf die beiden Hinterräder 9 zu ändern. Die Einleitung in das erste, große Sonnenrad 17 erfolgt über einen auf der Momentenverteilungs-Abtriebswelle 23 sitzenden Momentenverteilungs-Flansch 24 des Überlagerungsgetriebes 25. In Abhängigkeit vom Betrag sowie der Drehrichtung des von der Elektromaschine 26 generierten Antriebsmomentes erfolgt die Momentenverteilung zwischen den Fahrzeugrädern 9.

Nachfolgend wird die Getriebestruktur des Überlagerungsgetriebes 25 anhand der Figur 1 erläutert: demzufolge weist das Überlagerungsgetriebe 25 genau Planetengetriebe PG1, PG2 auf, von denen das Eingangs-Planetengetriebe PG1 als ein Ravigneaux-Radsatz ausgebildet ist, der eingangsseitig mit der Elektromaschine 26 verbunden ist. Demgegenüber ist das Ausgangs-Planetengetriebe PG2 als ein einfacher Planetengetriebe-Radsatz ausgebildet, was ausgangsseitig über eine Getriebeausgangswelle 29 mit der Achsdifferenzial-Eingangsseite 13 trieblich verbunden ist. Das Achsdifferenzial 3 sowie die beiden Planetengetriebe PG1, PG2 sind in Reihe hintereinander koaxial zur Flanschwelle 7 angeordnet. Das Eingangselement des Eingangs-Planetengetriebes PG1 ist durch ein erstes Sonnenrad 31 realisiert, das drehfest auf einer Getriebeeingangswelle 33 sitzt, die über eine Vorgelegestufe 51 mit der Elektromaschine 26 gekoppelt ist. Zudem weist das als Ravigneaux-Radsatz ausgebildete Eingangs-Planetengetriebe PG1 Planetenräder 35 eines radial äußeren Planetenradsatzes auf, die sowohl mit einem radial äußeren Hohlrad 37 als auch mit Planetenrädern 39 eines radial inneren Planetenradsatzes kämmen. Die Planetenräder 39 des radial inneren Planetenradsatzes kämmen zudem mit einem zweiten Sonnenrad 41. Die beiden Planetenradsätze sind an einem gemeinsamen Planetenradtträger 43 drehgelagert. Auf dem gemeinsamen Planetenradträger 43 sitzt drehfest ein erster Festbrems-Flansch 45, der über ein erstes Hybrid-Schaltelement SH1 am Getriebegehäuse festbremsbar oder davon lösbar ist. Auf der axial gegenüberliegenden Seite ist der gemeinsame Planetenradträger 43 mit einem Axialsteg 47 verlängert, auf dem ein Momentenverteilungs-Schaltelement STV sitzt, das mit dem Momentenverteilungs-Flansch 49 kuppelbar oder davon lösbar ist. Der Momentenverteilungs-Flansch wird drehfest von der Momentenverteilungs-Abtriebswelle 23 getragen, die an ihrem anderen Wellenende am ersten Sonnenrad 17 des Achsdifferenzials 3 angebunden ist.

Das Hohlrad 37 des Eingangs-Planetengetriebes PG1 ist zusammen mit einem Hohlrad 55 des Ausgangs-Planetengetriebes PG2 drehfest auf einer Hohlradwelle 53 angeordnet. Das Hohlrad 55 des Ausgangs-Planetengetriebes PG2 kämmt mit Planetenrädern 57, die auf einem Planetenradträger 59 drehbar gelagert sind. Der Planetenradträger 59 ist über einen Hybrid-Abtriebsflansch 61 drehfest auf der Getriebeausgangswelle 29 angeordnet, die mit der Achsdifferenzial-Eingangsseite 13 trieblich verbunden ist. Als Reaktionselement weist das Ausgangs-Planetengetriebe PG2 ein mit den Planetenrädern 57 kämmendes, gehäusefestes Sonnenrad 63 auf.

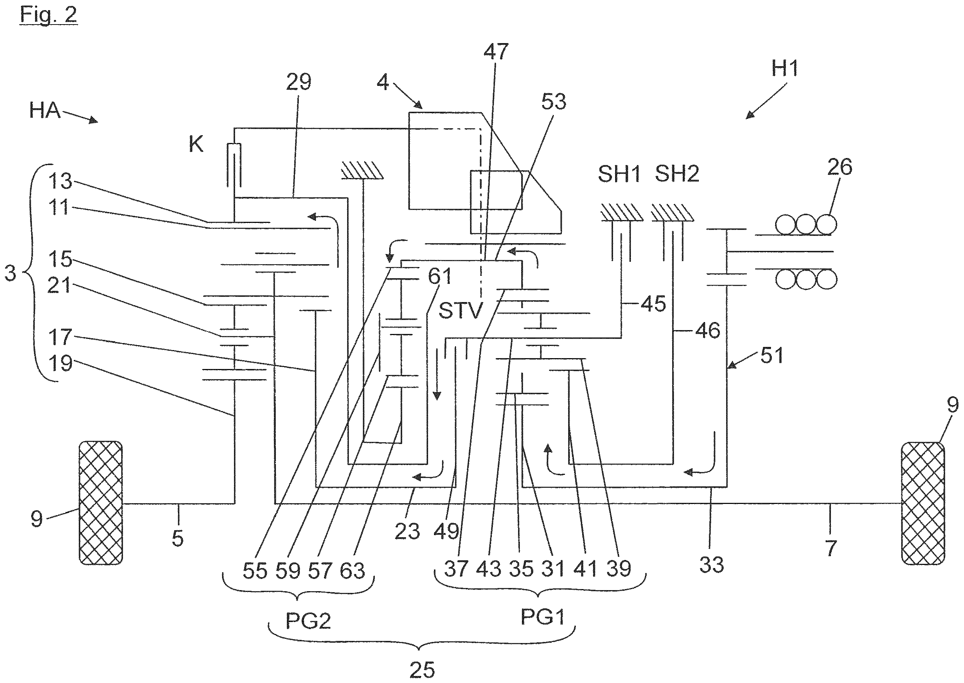

Um die Funktionsweise der Antriebsvorrichtung zu erläutern, wird anhand der Figur 2 eine Fahrsituation beschrieben, bei der die erste Hybrid-Gangstufe H1 geschaltet ist. Vorliegend ist die erste Hybrid-Gangstufe H1 exemplarisch als ein Anfahrgang ausgelegt, der bei niedrigen Fahrgeschwindigkeiten einlegbar ist. Bei eingelegter erster Hybrid-Gangstufe H1 ist der gemeinsame Planetenradträger 43 des Eingangs-Planetengetriebes PG1 über das erste Hybrid-Schaltelement SH1 gehäusefest geschaltet. Dadurch ergibt sich ein Lastpfad von der Elektromaschine 26 über das erste Sonnenrad 31 sowie über die Planetenräder 35 des radial äußeren Planetenradsatzes zum Hohlrad 37. Von dort führt der Lastpfad weiter über die Hohlradwelle 53 zum Ausgangs-Planetengetriebe PG2. Von dessen Planetenträger 59 führt der Lastpfad über den Hybrid-Abtriebsflansch 61 bis zur Getriebeausgangswelle 29.

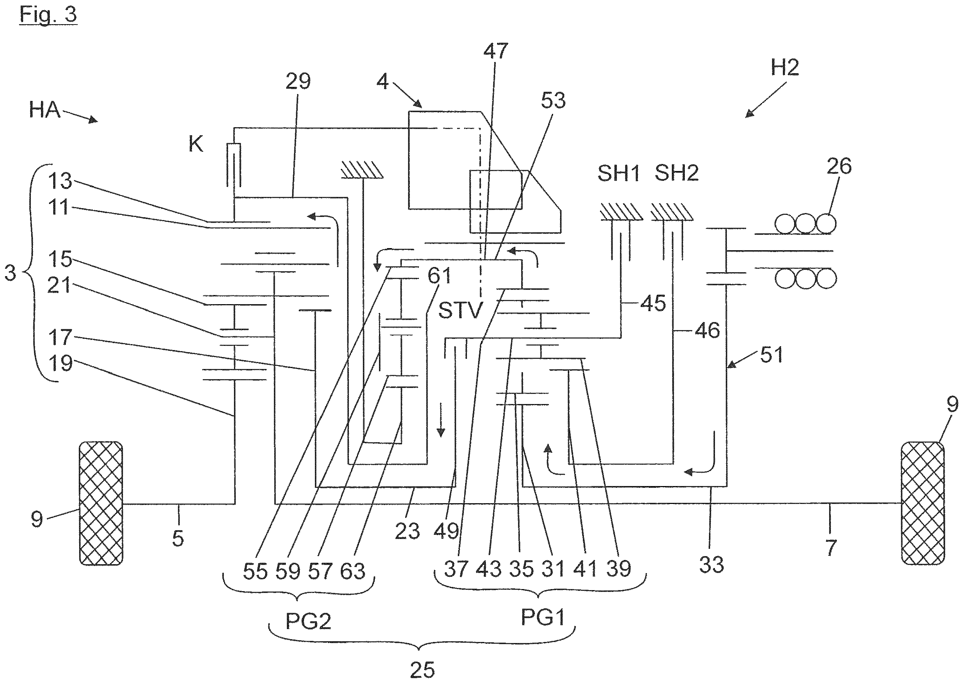

In der Figur 3 ist eine weitere Fahrsituation gezeigt, bei der das Überlagerungsgetriebe 25 bei eingelegter zweiter Hybrid-Gangstufe H2 betrieben ist. In diesem Fall ist ein Festbrems-Flansch 46 des zweiten Sonnenrads 41 über das zweite Hybrid-Schaltelement SH2 am Getriebegehäuse festgebremst. Dadurch ergibt sich ein Lastpfad von der Elektromaschine 26 über das erste Sonnenrad 31 sowie über die Planetenräder 35 des radial äußeren Planetenradsatzes zum Hohlrad 37. Von dort führt der Lastpfad weiter über die Hohlradwelle 53 und das Ausgangs-Planetengetriebe PG2 bis zur Getriebeausgangswelle 29.

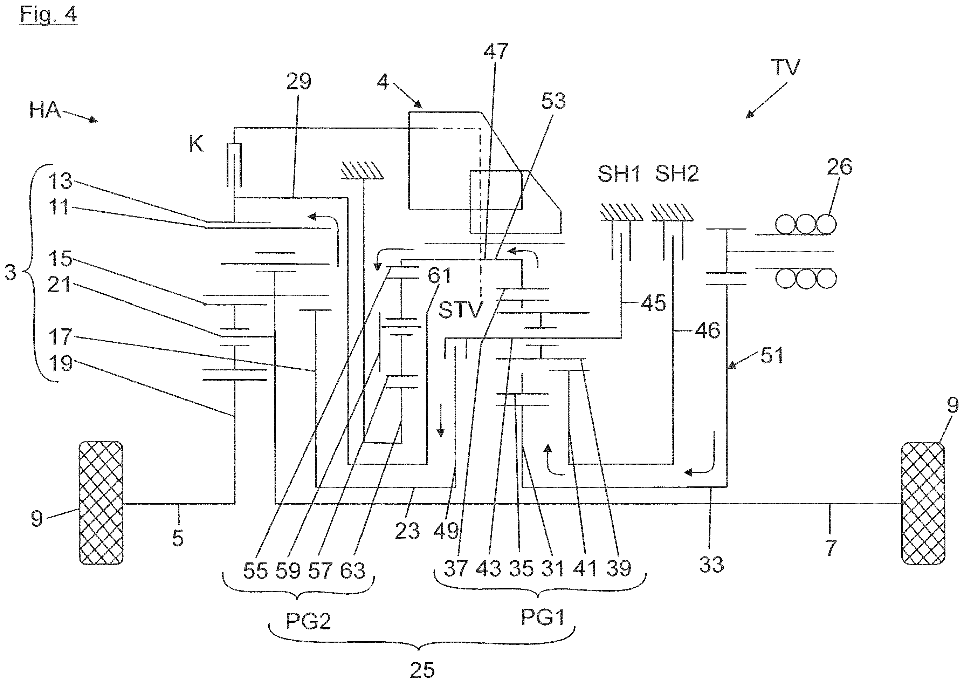

In der Figur 4 wird das Überlagerungsgetriebe 25 in einem Momentenverteilungs-Modus betrieben. Dieser Modus ist etwa bei einer Kurvenfahrt aktiviert, um zwischen den Flanschwellen 5, 7 eine Momentendifferenz zu erzielen. Im Momentenverteilungs-Modus ist die Momentenverteilungs-Gangstufe TV eingelegt, so dass die Momentenverteilungs-Abtriebswelle 23 mittels des Momentenverteilungs-Schaltelementes STV trieblich mit dem gemeinsamen Planetenradträger 43 des Eingangs-Planetengetriebes PG1 verbunden ist. Dadurch bildet sich ein Lastpfad von der Elektromaschine 26 in das Eingangs-Planetengetriebe PG1, an dessen gemeinsamen Planetenradträger 43 eine Leistungsverteilung in einen ersten Teilpfad und in einen Teilpfad erfolgt. Der erste Teilpfad führt von den Planetenrädern 35 des radial äußeren Planetenradsatzes über das Hohlrad 37 sowie über die Hohlradwelle 53 bis zum Ausgangs-Planetengetriebe PG2. Von dort führt der erste Teilpfad über den Planetenradträger 59 des Ausgangs-Planetengetriebes PG2 weiter zur Getriebeausgangswelle 29. Ein zweiter Teilpfad führt von dem gemeinsamen Planetenradträger 43 des Eingangs-Planetengetriebes PG1 über das geschlossene Momentenverteilungs-Schaltelement STV zur Momentenverteilungs-Abtriebswelle 23 und von dort zum ersten Achsdifferenzial-Sonnenrad 17.

## Patentansprüche

1. Antriebsvorrichtung beinhaltend eine Fahrzeugachse, insbesondere Hinterachse (HA), für ein zweispuriges Fahrzeug, wobei die Fahrzeugachse (HA) ein Achsdifferenzial (3) aufweist, das eingangsseitig mit einer Primär-Antriebsmaschine verbindbar ist und ausgangsseitig über beidseitig angeordnete Flanschwellen (5, 7) mit Fahrzeugrädern (9) der Fahrzeugachse (HA) verbindbar ist, wobei der Fahrzeugachse (HA) eine zusätzliche Antriebsmaschine (26) und ein schaltbares Überlagerungsgetriebe (25) zugeordnet ist, das in eine Momentenverteilungs-Gangstufe (TV) schaltbar ist, in der ein von der zusätzlichen Antriebsmaschine (26) erzeugtes Antriebsmoment erzeugt wird, in Abhängigkeit von dessen Größe und Drehrichtung eine Momentenverteilung auf die beiden Fahrzeugräder (9) änderbar ist, und in einem Hybrid-Modus schaltbar ist, in dem das von der zusätzlichen Antriebsmaschine (26) generierte Antriebsmoment über das Achsdifferenzial (3) gleichmäßig verteilt auf beide Flanschwellen (5, 7) der Fahrzeugräder (9) einkoppelbar ist, **dadurch gekennzeichnet, dass** das Überlagerungsgetriebe (25) genau zwei Planetengetriebe (PG1, PG2) aufweist, von denen ein Eingang-Planetengetriebe (PG1) als ein Ravigneaux-Radsatz ausgebildet ist, der eingangsseitig mit der zusätzlichen Antriebsmaschine (26) trieblich verbindbar ist, und von denen ein Ausgangs-Planetengetriebe (PG2) als ein einfacher Planetengetriebe-Radsatz mit genau einem Eingangselement (55), einem Reaktionselement (63) und einem Ausgangselement (59) ausgebildet ist, von denen das Eingangselement (55) mit dem Eingangs-Planetengetriebe (PG1) verbunden ist und das Ausgangselement (59) mit der Achsdifferenzial-Eingangsseite (13) trieblich verbunden ist, wobei bei einer geschalteten ersten Hybrid-Gangstufe (H1), insbesondere ein Anfahrgang, und bei einer geschalteten zweiten Hybrid-Gangstufe (H2) jeweils ein Lastpfad gebildet ist, in dem das Eingangs-Planetengetriebe (PG1) und das Ausgangs-Planetengetriebe (PG2) ohne Leistungsverzweigung eingebunden sind, und dass bei geschalteter Momentenverteilungs-Gangstufe (TV) ein Lastpfad gebildet ist, in dem das Eingangs-Planetengetriebe (PG1) und das Ausgangs-Planetengetriebe (PG2) eingebunden sind, wobei am Eingangs-Planetengetriebe (PG1) eine Leistungsverzweigung erfolgt.

2. Antriebsvorrichtung nach Anspruch 1, **dadurch gekennzeichnet, dass** die beiden Planetengetriebe (PG1, PG2) und das Achsdifferenzial (3) in Reihe hintereinander koaxial zur Flanschwelle (5, 7) angeordnet sind, und dass das Eingangs-Planetengetriebe (PG1) mit einem Eingangselement, insbesondere einem ersten Sonnenrad (31), mit einer von der zusätzlichen Antriebsmaschine (26) angetriebenen Getriebeeingangswelle (33) drehfest verbunden ist, und/oder dass ein Ausgangselement des Ausgangs-Planetengetriebes (PG2), insbesondere ein Planetenräder (57) tragender Planetenradträger (59) über einen Hybrid-Abtriebsflansch (61) drehfest auf einer Getriebeausgangswelle (29) angeordnet ist, die mit der Achsdifferenzial-Eingangsseite (13) trieblich verbunden ist.

3. Antriebsvorrichtung nach Anspruch 1 oder 2, **dadurch gekennzeichnet, dass** das Ausgangs-Planetengetriebe (PG2) als Reaktionselement ein mit den Planetenrädern (57) kämmendes, gehäusefestes Sonnenrad (63) aufweist, und/oder als Eingangselement ein mit den Planetenrädern (57) kämmendes Hohlrad (55) aufweist, das trieblich mit dem Eingangs-Planetengetriebe (PG1) gekoppelt ist.

4. Antriebsvorrichtung nach Anspruch 3, **dadurch gekennzeichnet, dass** das Hohlrad (55) des Ausgangs-Planetengetriebes (PG2) und ein Hohlrad (37) des Eingangs-Planetengetriebes (PG1) gemeinsam drehfest auf einer Hohlradwelle (53) angeordnet sind.

5. Antriebsvorrichtung nach einem der vorhergehenden Ansprüche, **dadurch gekennzeichnet, dass** in dem als Ravigneaux-Radsatz ausgebildeten Eingangs-Planetengetriebe (PG1) Planetenräder (35) eines radial äußeren Planetenradsatzes sowohl mit dem radial äußeren Hohlrad (37), jeweils mit Planetenrädern (39) eines radial inneren Planetenradsatzes als auch mit dem ersten Sonnenrad (31) kämmen, und dass die Planetenräder (39) des radial inneren Planetenradsatzes mit einem zweiten Sonnenrad (41) kämmen, wobei die beiden Planetenradsätze an einem gemeinsamen Planetenradträger (43) drehgelagert sind.

6. Antriebsvorrichtung nach Anspruch 5, **dadurch gekennzeichnet, dass** der gemeinsame Planetenradträger (43) des Eingangs-Planetengetriebes (PG1) über ein erstes Hybrid-Schaltelement (SH1) am Getriebegehäuse festbremsbar oder davon lösbar ist, so dass in der ersten Hybrid-Gangstufe (H1) der gemeinsame Planetenradträger (43) des Eingangs-Planetengetriebes (PG1) über das erste Hybrid-Schaltelement (SH1) gehäusefest geschaltet ist, so dass sich ein Lastpfad von der zusätzlichen Antriebsmaschine (26) über das erste Sonnenrad (31) sowie über die Planetenräder (35) des radial äußeren Planetenradsatzes zum Hohlrad (37) und von dort weiter über die Hohlradwelle (53) und das Ausgangs-Planetengetriebe (PG2) zur Getriebeausgangswelle (29) ergibt.

7. Antriebsvorrichtung nach Anspruch 5 oder 6, **dadurch gekennzeichnet, dass** das zweite Sonnenrad (41) über ein zweites Hybrid-Schaltelement (SH2) am Getriebegehäuse festbremsbar ist, so dass in der zweiten Hybrid-Gangstufe (H2) das zweite Sonnenrad (41) des Eingangs-Planetengetriebes (PG1) über das Hybrid-Schaltelement (SH2) gehäusefest geschaltet ist, so dass sich ein Lastpfad von der zusätzlichen Antriebsmaschine (26) über das erste Sonnenrad (31) sowie über die Planetenräder (35) des radial äußeren Planetenradsatzes zum Hohlrad (37) und von dort weiter über die Hohlradwelle (53) und das Ausgangs-Planetengetriebe (PG2) zur Getriebeausgangswelle (29) ergibt.

8. Antriebsvorrichtung nach Anspruch 7, **dadurch gekennzeichnet, dass** eine zum Achsdifferenzial (3) führende Momentenverteilungs-Abtriebswelle (23) einen Momentenverteilungs-Flansch (49) drehfest trägt, der über ein Momentenverteilungs-Schaltelement (STV) trieblich mit dem gemeinsamen Planetenradträger (43) des Eingangs-Planetengetriebes (PG1) koppelbar oder davon entkoppelbar ist.

9. Antriebsvorrichtung nach Anspruch 8, **dadurch gekennzeichnet, dass** das Achsdifferenzial (3) als ein Ravigneaux-Radsatz ausgebildet ist, bei dem Planetenräder (11) eines radial äußeren Planetenradsatzes sowohl mit einem radial äußeren Hohlrad (13), das die Eingangsseite des Achsdifferenzials (3) bildet, jeweils mit Planetenrädern (15) eines radial inneren Planetenradsatzes als auch mit einem ersten Sonnenrad (17) kämmen, und dass die Planetenräder (15) des radial inneren Planetenradsatzes mit einem zweiten Sonnenrad (19) kämmen, wobei die beiden Planetenradsätze an einem gemeinsamen Planetenradträger (21) drehgelagert sind, und dass insbesondere das erste Sonnenrad (17) auf der Momentenverteilungs-Abtriebswelle (23) drehfest angeordnet ist, das zweite Sonnenrad (19) drehfest auf der einen Flanschwelle (5) angeordnet ist und der gemeinsame Planetenradträger (21) drehfest auf der anderen Flanschwelle (7) angeordnet ist.

10. Antriebsvorrichtung nach Anspruch 8, **dadurch gekennzeichnet, dass** bei eingelegter Momentenverteilungs-Gangstufe (TV) die Momentenverteilungs-Welle (23) und der gemeinsame Planetenradträger (43) des Eingangs-Planetengetriebes (PG1) über das Momentenverteilungs-Schaltelement (STV) trieblich verbunden sind, so dass sich ein Lastpfad von der zusätzlichen Antriebsmaschine (26) in das Eingangs-Planetengetriebe (PG1) bildet, an dessen gemeinsamen Planetenradträger (43) eine Leistungsverteilung erfolgt, bei der ein erster Teilpfad über das Hohlrad (37) des Eingangs-Planetengetriebes (PG1) und über die Hohlradwelle (53) zum Ausgangs-Planetengetriebe (PG2) führt, und von dort über dessen Planetenradträger (59) weiter zur Getriebeausgangswelle (29) führt, und ein zweiter Teilpfad über den gemeinsamen Planetenradträger (43) des Eingangs-Planetengetriebes (PG1) und das geschlossene Momentenverteilungs-Schaltelement (STV) zur Momentenverteilungs-Welle (23) führt und von dort zum ersten Sonnenrad (17) des Achsdifferenzials (3) führt.

11. Antriebsvorrichtung nach Anspruch 2, **dadurch gekennzeichnet, dass** die zusätzliche Antriebsmaschine (26) zur Drehmomentwandlung über eine Vorgelegestufe (51) mit der Getriebeeingangswelle (33) gekoppelt ist, insbesondere eine einstufige Stirnradstufe, und/oder dass die zusätzliche Antriebsmaschine (26) achsparallel zur Flanschwelle (5, 7) angeordnet ist.

12. Antriebsvorrichtung nach den Ansprüchen 6, 7 und 8, **dadurch gekennzeichnet, dass** in der Fahrzeugquerrichtung betrachtet von fahrzeuginnen nach fahrzeugaußen in einer Reihenfolge hintereinander das Achsdifferenzial (3), das Ausgangs-Planetengetriebe (PG2), das Eingangs-Planetengetriebe (PG1) und die zusätzliche Antriebsmaschine (26) angeordnet sind, und dass die Hybrid-Schaltelemente (SH1, SH2) in Axialrichtung zwischen dem Eingangs-Planetengetriebe (PG1) und der zusätzlichen Antriebsmaschine (26) positioniert sind, und/oder dass das Momentenverteilungs-Schaltelement (STV) zwischen dem Eingangs- und Ausgangs-Planetengetriebe (PG1, PG2) positioniert ist.

## Claims

1. Drive device comprising a vehicle axle, in particular a rear axle (HA), for a two-track vehicle, wherein the vehicle axle (HA) has an axle differential (3) which can be connected on the input side to a primary drive engine and on the output side to vehicle wheels (9) of the vehicle axle (HA) via flanged shafts (5, 7) arranged on both sides, the vehicle axle (HA) being associated with an additional drive engine (26) and a shiftable superimposed transmission (25) which can be shifted into a torque distribution gear stage (TV), in which a drive torque generated by the additional drive engine (26) is generated, as a function of the magnitude and direction of rotation of which torque distribution to the two vehicle wheels (9) can be changed, and which can be shifted into a hybrid mode in which the drive torque generated by the additional drive engine (26) can be coupled via the axle differential (3) in an evenly distributed manner to both flanged shafts (5, 7) of the vehicle wheels (9), **characterised in that** the superimposed transmission (25) has precisely two planetary gears (PG1, PG2), of which one input planetary gear (PG1) is configured as a Ravigneaux gear set, which can be drivingly connected on the input side to the additional drive engine (26) and of which an output planetary gear (PG2) is configured as a simple planetary gear set with precisely one input element (55), one reaction element (63) and one output element (59), of which the input element (55) is connected to the input planetary gear (PG1) and the output element (59) is drivingly connected to the axle differential input side (13), wherein in the case of a switched first hybrid gear stage (H1), in particular a starting gear, and in the case of a switched second hybrid gear stage (H2), a load path is in each case formed, in which the input planetary gear (PG1) and the output planetary gear (PG2) are engaged without branching of the power, and **in that**, in the case of a switched torque distribution gear stage (TV), a load path is formed in which the input planetary gear (PG1) and the output planetary gear (PG2) are engaged, with power branching taking place at the input planetary gear (PG1).

2. Drive device according to claim 1, **characterised in that** the two planetary gears (PG1, PG2) and the axle differential (3) are arranged in series one behind the other coaxially with the flanged shaft (5, 7), and **in that** the input planetary gear (PG1) is connected in a rotationally fixed manner with an input element, in particular a first sun gear (31) with a transmission input shaft (33) driven by the additional drive engine (26), and/or **in that** an output element of the output planetary gear (PG2), in particular a planetary gear carrier (59) carrying planetary gears (57), is arranged in a rotationally fixed manner via a hybrid output flange (61) on a transmission output shaft (29) which is drivingly connected to the axle differential input side (13).

3. Drive device according to claim 1 or 2, **characterised in that** the output planetary gear (PG2) has, as reaction element, a sun gear (63) which meshes with the planetary gears (57) and is fixed to the housing, and/or has, as input element, a ring gear (55) which meshes with the planetary gears (57) and is drivingly coupled to the input planetary gear (PG1).

4. Drive device according to claim 3, **characterised in that** the ring gear (55) of the output planetary gear (PG2) and a ring gear (37) of the input planetary gear (PG1) are arranged together in a rotationally fixed manner on a ring gear shaft (53).

5. Drive device according to any one of the preceding claims, **characterised in that** in the input planetary gear (PG1) configured as a Ravigneaux gear set, planetary gears (35) of a radially outer planetary gear set mesh both with the radially outer ring gear (37), respectively with planetary gears (39) of a radially inner planetary gear set, as well as with the first sun gear (31), and **in that** the planetary gears (39) of the radially inner planetary gear set mesh with a second sun gear (41), the two planetary gear sets being rotatably mounted on a common planetary gear carrier (43).

6. Drive device according to claim 5, **characterised in that** the common planetary gear carrier (43) of the input planetary gear set (PG1) can be fixedly braked to or released from the transmission housing via a first hybrid shift element (SH1), so that in the first hybrid gear stage (H1) the common planetary gear carrier (43) of the input planetary gear set (PG1) is shifted fixedly to the housing via the first hybrid shift element (SH1), so that a load path results from the additional drive engine (26) via the first sun gear (31) as well as via the planetary gears (35) of the radially outer planetary gear set to the ring gear (37) and from there further via the ring gear shaft (53) and the output planetary gear (PG2) to the transmission output shaft (29).

7. Drive device according to claim 5 or 6, **characterised in that** the second sun gear (41) can be fixedly braked on the transmission housing via a second hybrid shift element (SH2), so that in the second hybrid gear stage (H2) the second sun gear (41) of the input planetary gear (PG1) is fixedly shifted via the hybrid shift element (SH2), so that a load path results from the additional drive engine (26) via the first sun gear (31) as well as via the planetary gears (35) of the radially outer planetary gear set to the ring gear (37) and from there further via the ring gear shaft (53) and the output planetary gear (PG2) to the transmission output shaft (29).

8. Drive device according to claim 7, **characterised in that** a torque distribution output shaft (23) leading to the axle differential (3) carries a torque distribution flange (49) in a rotationally fixed manner, which can be drivingly coupled to or decoupled from the common planetary gear carrier (43) of the input planetary gear (PG1) via a torque distribution shift element (STV).

9. Drive device according to claim 8, **characterised in that** the axle differential (3) is configured as a Ravigneaux gear set, in which planetary gears (11) of a radially outer planetary gear set mesh both with a radially outer ring gear (13) forming the input side of the axle differential (3), respectively with planetary gears (15) of a radially inner planetary gear set, and with a first sun gear (17), and **in that** the planetary gears (15) of the radially inner planetary gear set mesh with a second sun gear (19), the two planetary gear sets being rotatably mounted on a common planetary gear carrier (21), and **in that** in particular the first sun gear (17) is arranged in a rotationally fixed manner on the torque distribution output shaft (23), the second sun gear (19) is arranged in a rotationally fixed manner on one flanged shaft (5) and the common planetary gear carrier (21) is arranged in a rotationally fixed manner on the other flanged shaft (7).

10. Drive device according to claim 8, **characterised in that,** when the torque distribution gear stage (TV) is engaged, the torque distribution shaft (23) and the common planetary gear carrier (43) of the input planetary gear (PG1) are drivingly connected via the torque distribution shift element (STV), so that a load path is formed from the additional drive engine (26) into the input planetary gear (PG1), at the common planetary gear carrier (43) of which a power distribution takes place, in which a first partial path leads via the ring gear (37) of the input planetary gear (PG1) and via the ring gear shaft (53) to the output planetary gear (PG2), and from there leads further via its planetary gear carrier (59) to the transmission output shaft (29), and a second partial path leads via the common planetary gear carrier (43) of the input planetary gear (PG1) and the closed torque distribution shift element (STV) to the torque distribution shaft (23) and from there to the first sun gear (17) of the axle differential (3).

11. Drive device according to claim 2, **characterised in that** the additional drive engine (26) is coupled to the transmission input shaft (33) for torque conversion via a preload stage (51), in particular a single stage spur gear stage, and/or **in that** the additional drive engine (26) is arranged axially parallel to the flanged shaft (5, 7).

12. Drive device according to claims 6, 7 and 8, **characterised in that,** viewed in the vehicle transverse direction from the vehicle interior to the vehicle exterior, the axle differential (3), the output planetary gear (PG2), the input planetary gear (PG1) and the additional drive machine (26) are arranged in series one behind the other, and **in that** the hybrid shift elements (SH1, SH2) are positioned in the axial direction between the input planetary gear (PG1) and the additional drive engine (26), and/or **in that** the torque distribution shift element (STV) is positioned between the input and output planetary gear (PG1, PG2).

## Revendications

1. Dispositif d'entraînement moteur comprenant un essieu de véhicule, en particulier un essieu arrière (HA), d'un véhicule à deux alignements de roues, dans lequel l'essieu de véhicule (HA) présente un différentiel de pont (3) qui peut être relié côté entrée à un moteur d'entrainement primaire et être relié côté sortie à des roues de véhicule (9) de l'essieu de véhicule (HA) par l'intermédiaire de demi-arbres (5, 7) agencés des deux côtés, dans lequel l'essieu de véhicule (HA) est associé à un moteur d'entrainement supplémentaire (26) et à un engrenage de superposition (25) commutable, pouvant être commuté dans un rapport de répartition de couple (TV) au sein duquel un couple d'entraînement, en fonction de l'ampleur et du sens de rotation duquel une répartition de couple sur les deux roues de véhicule (9) peut être modifiée, est généré par le moteur d'entrainement supplémentaire (26), et pouvant être commuté dans un mode hybride au sein duquel le couple d'entraînement généré par le moteur d'entrainement supplémentaire (26) peut être injecté de manière uniformément répartie sur les deux demi-arbres (5, 7) des roues de véhicule (9) par l'intermédiaire du différentiel de pont (3), **caractérisé en ce que** l'engrenage de superposition (25) présente exactement deux engrenages planétaires (PG1, PG2), dont un engrenage planétaire d'entrée (PG1) est réalisé sous la forme d'un train planétaire de Ravigneaux pouvant être relié en entrainement côté entrée au moteur d'entrainement supplémentaire (26) et dont un engrenage planétaire de sortie (PG2) est réalisé sous la forme d'un train à engrenage planétaire simple avec exactement un élément d'entrée (55), un élément de réaction (63) et un élément de sortie (59), parmi lesquels l'élément d'entrée (55) est relié à l'engrenage planétaire d'entrée (PG1) et l'élément de sortie (59) est relié en entrainement au côté d'entrée de différentiel de pont (13), dans lequel, lorsqu'un premier rapport hybride (H1), en particulier un rapport de démarrage, est commuté et lorsqu'un second rapport hybride (H2) est commuté, respectivement un trajet de charge est formé au sein duquel l'engrenage planétaire d'entrée (PG1) et l'engrenage planétaire de sortie (PG2) sont incorporés sans dérivation de puissance, et **en ce que**, lorsqu'un rapport de répartition de couple (TV) est commuté, un trajet de charge est formé au sein duquel l'engrenage planétaire d'entrée (PG1) et l'engrenage planétaire de sortie (PG2) sont incorporés, dans lequel une dérivation de puissance a lieu au niveau de l'engrenage planétaire d'entrée (PG1).

2. Dispositif d'entraînement moteur selon la revendication 1, **caractérisé en ce que** les deux engrenages planétaires (PG1, PG2) et le différentiel de pont (3) sont agencés l'un derrière l'autre de manière coaxiale par rapport aux demi-arbres (5, 7), et **en ce que** l'engrenage planétaire d'entrée (PG1) est relié de manière solidaire en rotation par un élément d'entrée, en particulier par une première roue solaire (31), à un arbre d'entrée de transmission (33) entraîné par le moteur d'entrainement supplémentaire (26), et/ou **en ce qu'**un élément de sortie de l'engrenage planétaire de sortie (PG2), en particulier un porte-satellites (59) supportant des pignons satellites (57), est agencé de manière solidaire en rotation par l'intermédiaire d'un plateau de sortie hybride (61) sur un arbre de sortie de transmission (29) qui est relié en entraînement au côté d'entrée de différentiel de pont (13).

3. Dispositif d'entraînement moteur selon la revendication 1 ou 2, **caractérisé en ce que** l'engrenage planétaire de sortie (PG2) présente une roue solaire (63) solidaire du carter, engrenant avec les pignons satellites (57) et faisant office d'élément de réaction, et/ou présente une couronne planétaire (55) engrenant avec les pignons satellites (57), couplée en entraînement avec l'engrenage planétaire d'entrée (PG1) et faisant office d'élément d'entrée.

4. Dispositif d'entraînement moteur selon la revendication 3, **caractérisé en ce que** la couronne planétaire (55) de l'engrenage planétaire de sortie (PG2) et une couronne planétaire (37) de l'engrenage planétaire d'entrée (PG1) sont agencées de manière mutuellement solidaire en rotation sur un arbre de couronne planétaire (53).

5. Dispositif d'entraînement moteur selon l'une quelconque des revendications précédentes, **caractérisé en ce que**, au sein de l'engrenage planétaire d'entrée (PG1) réalisé sous forme de train planétaire de Ravigneaux, des pignons satellites (35) d'un train planétaire radialement extérieur engrènent à la fois avec la couronne planétaire radialement extérieure (37), respectivement avec des pignons satellites (39) d'un train planétaire radialement intérieur, et avec la première roue solaire (31), et **en ce que** les pignons satellites (39) du train planétaire radialement intérieur engrènent avec une seconde roue solaire (41), dans lequel les deux trains planétaires sont montés rotatifs sur un porte-satellites commun (43).

6. Dispositif d'entraînement moteur selon la revendication 5, **caractérisé en ce que** le porte-satellites commun (43) de l'engrenage planétaire d'entrée (PG1) peut être freiné jusqu'à l'arrêt au niveau du carter d'engrenage, ou être débrayé par rapport à celui-ci, par l'intermédiaire d'un premier élément de commutation hybride (SH1), de sorte que, dans le premier rapport hybride (H1), le porte-satellites commun (43) de l'engrenage planétaire d'entrée (PG1) est commuté de manière solidaire du carter par l'intermédiaire du premier élément de commutation hybride (SH1), de sorte qu'un cheminement des charges en résulte, qui va du moteur d'entrainement supplémentaire (26) jusqu'à la couronne planétaire (37) en passant par la première roue solaire (31) et par les pignons satellites (35) du train planétaire radialement extérieur et continue à partir de là jusqu'à l'arbre de sortie de transmission (29) en passant par l'arbre de couronne planétaire (53) et l'engrenage planétaire de sortie (PG2).

7. Dispositif d'entraînement moteur selon la revendication 5 ou 6, **caractérisé en ce que** la seconde roue solaire (41) peut être freinée jusqu'à l'arrêt au niveau du carter d'engrenage par l'intermédiaire d'un second élément de commutation hybride (SH2), de sorte que, dans le second rapport hybride (H2), la seconde roue solaire (41) de l'engrenage planétaire d'entrée (PG1) est commutée de manière solidaire du carter par l'intermédiaire de l'élément de commutation hybride (SH2), de sorte qu'un cheminement des charges en résulte, qui va du moteur d'entrainement supplémentaire (26) jusqu'à la couronne planétaire (37) en passant par la première roue solaire (31) et par les pignons satellites (35) du train planétaire radialement extérieur et continue à partir de là jusqu'à l'arbre de sortie de transmission (29) en passant par l'arbre de roue solaire (53) et l'engrenage planétaire de sortie (PG2).

8. Dispositif d'entraînement moteur selon la revendication 7, **caractérisé en ce qu'**un arbre de sortie de répartition de couple (23) menant au différentiel de pont (3) supporte de manière solidaire en rotation un plateau de répartition de couple (49) qui peut être couplé en entrainement au porte-satellites commun (43) de l'engrenage planétaire d'entrée (PG1), ou désaccouplé de celui-ci, par l'intermédiaire d'un élément de commutation de répartition de couple (STV).

9. Dispositif d'entraînement moteur selon la revendication 8, **caractérisé en ce que** le différentiel de pont (3) est réalisé sous la forme d'un train planétaire de Ravigneaux, dans lequel des pignons satellites (11) d'un train planétaire radialement extérieur engrènent à la fois avec une couronne planétaire (13) radialement extérieure qui forme le côté entrée du différentiel de pont (3), respectivement avec des pignons satellites (15) d'un train planétaire radialement intérieur, et avec une première roue solaire (17), et **en ce que** les pignons satellites (15) du train planétaire radialement intérieur engrènent avec une seconde roue solaire (19), dans lequel les deux trains planétaires sont montés rotatifs au niveau d'un porte-satellites commun (21), et **en ce que** en particulier la première roue solaire (17) est agencée de manière solidaire en rotation sur l'arbre de sortie de répartition de couple (23), la seconde roue solaire (19) est agencée de manière solidaire en rotation sur un demi-arbre (5) et le porte-satellites commun (21) est agencé de manière solidaire en rotation sur l'autre demi-arbre (7).

10. Dispositif d'entraînement moteur selon la revendication 8, **caractérisé en ce que**, lorsque le rapport de répartition de couple (TV) est enclenché, l'arbre de répartition de couple (23) et le porte-satellites commun (43) de l'engrenage planétaire d'entrée (PG1) sont reliés en entraînement par l'intermédiaire de l'élément de commutation de répartition de couple (STV), de sorte qu'un cheminement des charges est formé, qui va du moteur d'entrainement supplémentaire (26) jusqu'à l'engrenage planétaire d'entrée (PG1) au niveau du porte-satellites commun (43) duquel s'opère une répartition de puissance pour laquelle un premier trajet partiel mène jusqu'à l'engrenage planétaire de sortie (PG2) en passant par la couronne planétaire (37) de l'engrenage planétaire d'entrée (PG1) et par l'arbre de couronne planétaire (53), et continue à partir de là jusqu'à l'arbre de sortie de transmission (29) en passant par le porte-satellites (59) dudit engrenage de sortie, et un second trajet partiel mène jusqu'à l'arbre de répartition de couple (23) en passant par le porte-satellites commun (43) de l'engrenage planétaire d'entrée (PG1) et par l'élément de commutation de répartition de couple (STV) fermé et mène à partir de là jusqu'à la première roue solaire (17) du différentiel de pont (3).

11. Dispositif d'entraînement moteur selon la revendication 2, **caractérisé en ce que** le moteur d'entrainement supplémentaire (26) est couplé à l'arbre d'entrée de transmission (33) par l'intermédiaire d'un étage de renvoi (51), en particulier d'un étage cylindrique droit mono-étagé, en vue d'une conversion de couple, et/ou **en ce que** le moteur d'entraînement supplémentaire (26) est agencé de manière axialement parallèle aux demi-arbres (5, 7).

12. Dispositif d'entraînement moteur selon les revendications 6, 7 et 8, **caractérisé en ce que**, considérés dans la direction transversale du véhicule, le différentiel de pont (3), l'engrenage planétaire de sortie (PG2), l'engrenage planétaire d'entrée (PG1) et le moteur d'entrainement supplémentaire (26) sont agencés l'un derrière l'autre dans cet ordre de l'intérieur vers l'extérieur du véhicule, et **en ce que** les éléments de commutation hybrides (SH1, SH2) sont positionnés dans la direction axiale entre l'engrenage planétaire d'entrée (PG1) et le moteur d'entrainement supplémentaire (26), et/ou **en ce que** l'élément de commutation de répartition de couple (STV) est positionné entre l'engrenage planétaire d'entrée et l'engrenage planétaire de sortie (PG1, PG2).
